Europäisches Patentamt

European Patent Office

Office européen des brevets

(19)

(11) **EP 1 116 510 A1**

(12) **EUROPEAN PATENT APPLICATION**
published in accordance with Art. 158(3) EPC

(43) Date of publication:
**18.07.2001 Bulletin 2001/29**

(51) Int Cl.7: **B01D 39/16**

(21) Application number: **99919635.5**

(86) International application number:
**PCT/JP99/02573**

(22) Date of filing: **17.05.1999**

(87) International publication number:
**WO 99/64135 (16.12.1999 Gazette 1999/50)**

(84) Designated Contracting States:
**AT BE CH CY DE DK ES FI FR GB GR IE IT LI LU MC NL PT SE**

(30) Priority: **08.06.1998 JP 15946998**

(71) Applicant: **Daikin Industries, Ltd.**
**Osaka-shi, Osaka 530-8323 (JP)**

(72) Inventors:
• **TAMARU, Shinji**
**Yodogawa-seisaku. Daikin Ind. Ltd.**
**Settsu-shi Osaka 5660-8585 (JP)**

• **YAMAMOTO, Katsutoshi**
**Yodoga.seisak.Daikin Ind.Ltd**
**Settsu-shi Osaka 566-8585 (JP)**
• **ASANO, Jun**
**Yodogawa-seisakusho, Daikin Ind. Ltd.**
**Settsu-shi Osaka 566-8585 (JP)**

(74) Representative: **HOFFMANN - EITLE**
**Patent- und Rechtsanwälte**
**Arabellastrasse 4**
**81925 München (DE)**

(54) **FILTER MEDIUM FOR DUST COLLECTOR OF HIGH TEMPERATURE FURNACE UNIT**

(57) To provide a filter bag which can collect submicron particles such as dioxin under high temperature operation environment at high efficiency and is excellent in an ability of dislodging of dusts. A filter material for dust collector for high temperature furnace which comprises a base fabric obtained from a woven or knitted fabric of heat resistant fiber and a felt layer of fluorine-containing resin fiber, for example, PTFE staple fiber having a branch and/or a loop and is characterized in that the layer of fluorine-containing resin fiber forms at least one outermost layer of the filter material. Between the base fabric and the outermost fluorine-containing resin fiber layer may be provided an intermediate layer of heat resistant fiber.

FIG. 1

**Description**

TECHNICAL FIELD

The present invention relates to a filter material used for a dust collector for high temperature furnaces such as incinerator and melting furnace, particularly a filter material for a filter bag being effective for removing harmful substances such as dioxin.

BACKGROUND ART

Gases exhausted from high temperature furnaces such as an incinerator for various garbage and wastes and production equipment such as a melting furnace and drying oven contain solid particles such as soot and dusts, and therefore are exhausted after the solid particles are collected and removed with a dust collector.

As methods for dust collection of those high temperature furnaces, a scrubber method, cyclone method, filter bag method, etc. are known. Among them, the filter bag method has been used widely in various fields as compared with other methods for dust collection because the filter bag has a simple structure and a high filtration ability.

The filter bag method is a method for introducing exhaust gas in a housing having a plurality of filter cloths (filter bags) in the form of cylinder or envelope and then passing the exhaust gas through the filter bags to collect solid particles on inner and outer surfaces of the filter cloths. The filter cloths are produced by processing polyester fiber, meta-linked type aramid fiber, para-linked type aramid fiber, polyphenylene sulfide fiber, polyimide fiber, phenol resin fiber, polytetrafluoroethylene fiber, carbon fiber or glass fiber or a mixture of two or more thereof into a form of felt or woven fabric, depending on a temperature of the exhaust gas and chemical conditions such as acid, alkali and moisture content.

Dust collection with a filter bag is carried out in such a manner that at an initial stage of filtration, relatively large solid particles collected around a surface of the filter cloth forms a primary adhesion layer and then solid particles in exhaust gas are collected and accumulated on the primary adhesion layer to form a secondary adhesion layer. Though a substantial collecting ability of a filter bag is achieved by formation of the primary adhesion layer, a pressure loss of the filter is increased by adhesion and accumulation of solid particles. Therefore dislodging of accumulated substances are periodically carried out by pulse jet method or the like method to revive the filter. However there is a problem that fine particles are not collected and are passed through the filter cloth during a period of time from the removal of accumulated substances until the primary adhesion layer is formed.

In case of incinerators, particularly incinerators for municipal garbage, industrial wastes and wastes from hospitals, most of the methods employed on dust collectors for flying ash generated from incineration of wastes are the above-mentioned filter bag method.

To the dust collector for incinerator is fed a waste gas from the incinerator through a cooling equipment, but a temperature of the waste gas having passed the cooling equipment is still 150° to 250°C. Therefore a material of filter material of filter bag used on the dust collector is the above-mentioned one having heat resistance. Examples of the filter materials which are commercially available and used widely are, for instance, a woven fabric of glass fiber, a felt produced by planting, to a heat resistant base fabric, a fiber mixture of polytetrafluoroethylene (PTFE) monofilament produced by emulsion spinning method and having neither branch nor loop and glass fiber in a weight ratio of 85/15, and the like.

The woven fabric of glass fiber costs low but poor in chemical resistance and air permeability. On the other hand, the felt of PTFE and glass fiber mixture does not have such a problem but is inferior in dislodging ability of dust and is expensive.

Nowadays there is a problem that dioxin is generated by incineration of wastes such as municipal garbage and released in the air without being collected even with a dust collector. Dioxin is a thermally stable substance having a melting point of 302° to 306°C and a thermal decomposition temperature of 860° to 920°C, and is said to be generated at a temperature around 300°C. Therefore the tendency is toward a low temperature treatment at 150° to 170°C by lowering an operation temperature of dust collector. As a result of that tendency, since such a high heat resistance as before is not demanded, filter materials produced from a felt of polyphenylene sulfide fiber, polyimide fiber, meta-linked type aramid fiber and para-linked type aramid fiber have been developed.

With respect to releasing of dioxin into the air, dioxin is in the form of solid at an operation temperature of dust collector. Most of dioxin is fed to the dust collector in a state of being stuck on flying ash and therein is collected and removed together with the flying ash of particle size corresponding to collecting ability of a filter bag. However either of the above-mentioned filter materials for dust collector for incinerator which are used at present or proposed is insufficient in collecting ability of flying ash having so-called submicron particle size of not more than 1 μm, and there is a problem with lowering of collecting ability after dislodging of dust. This is considered one of causes for dioxin contamination outside a treating site.

A filter material being capable of collecting fine particles of submicron is practically used in the field of semi-conductor. For collection of valuable powder, a filter material produced by laminating a polyester felt with an expanded porous PTFE membrane by using an adhesive is known.

Since a thickness of the porous PTFE membrane of such a filter material having a high collecting ability is as thin as not more than 25 µm, the membrane is made to adhere to a base material with a hotmelt type adhesive. However there arise troubles that the adhesive is deteriorated at an operation temperature of dust collector of 150° to 170°C or higher, peeling of the membrane arises at dislodging of dusts and flowing of the adhesive occurs due to heat, thereby blocking pores of the membrane. Therefore such a filter material cannot be used as a filter bag for dust collector for incinerator.

As mentioned above, at present there is no filter material which has heat resistance and can collect flying ash of submicron particle size.

It is an object of the present invention to provide a filter material being capable of collecting fine particles of submicron at high collection efficiency under high temperature environment.

Further an object of the present invention is to provide a filter bag for dust collector for incinerator which can collect flying ash of submicron particle size such as dioxin at high efficiency.

DISCLOSURE OF INVENTION

Namely the present invention relates to the filter material for dust collector for high temperature furnace which comprises a base fabric of heat resistant fiber and a layer of fluorine-containing resin fiber and is characterized in that the layer of fluorine-containing resin fiber forms at least one outermost layer of the filter material. In the present invention the dust collector for high temperature furnace means a dust collector operated at an operation temperature of not less than 120°C.

In the present invention it is preferable that the filter material has an intermediate layer of heat resistant fiber between the base fabric and the outermost fluorine-containing resin fiber layer. The filter material is suitably used at a site where dioxin is generated.

The fluorine-containing resin fiber is preferably polytetrafluoroethylene (PTFE) fiber. Also it is preferable that the fluorine-containing resin fiber has a branch and/or a loop.

It is preferable that a heat resistant fiber for the base fabric or intermediate layer is polyphenylene sulfide (PPS) fiber.

It is also preferable that a weight per unit area of the outermost fluorine-containing resin fiber layer is 50 to 300 g/m$^2$.

When the filter material of the present invention is used for the dust collector for high temperature furnace, it is preferable that a tensile strength of the base fabric (Both of the base fabric and the intermediate layer when the latter is provided, hereinafter the same) is not less than 30 kgf/5 cm and that initial air permeability of the filter material is not less than 1 cc/cm$^2$/sec. Initial collection efficiency of dioctyl phthalate (DOP) particles having a particle size of not less than 1 µm is not less than 90 %, preferably not less than 95 %. Further it is preferable that initial collection efficiency of dioctyl phthalate (DOP) particles having a particle size of not less than 0.3 µm is not less than 70 %, preferably not less than 90 %.

Provided that the particle size (µm) of dioctyl phthalate particles is represented by X and PF value calculated from the equation (1):

$$\text{PF value} = \frac{-\log (\text{particle penetration efficiency})}{\text{Pressure loss (mmH}_2\text{O)}} \times 100 \tag{1}$$

is represented by Y, preferred filter material is one having Y meeting the following equation:

$$Y > 29.34X^{0.3684}$$

Also the present invention relates to the filter bag for dust collector produced by using the above-mentioned filter material and to the dust collector provided with the filter bag. Examples of high temperature furnaces to which the present invention is suitably applicable are various incinerators such as municipal garbage incinerator, various industrial waste incinerators and medical waste incinerator, melting furnace for various metals, baking oven, drying oven (equipment), boiler, and the like.

BRIEF DESCRIPTION OF THE DRAWINGS

Fig. 1 is a diagrammatic cross-sectional view of the filter material of composite felt type before dust collection, which is one embodiment of the present invention.

Fig. 2 is a diagrammatic cross-sectional view of the filter material shown in Fig. 1 after dust collection.

Fig. 3 is a diagrammatic cross-sectional view of a machine for tearing and opening a uni-axially stretched PTFE film, which is used in the present invention.

Fig. 4 is a diagrammatic view of the PTFE staple fibers having a loop and/or a branch, which are used in the present invention.

Fig. 5 is a diagrammatic cross-sectional view of a machine for measuring an amount of accumulated dusts in Examples of the present invention.

Fig. 6 is a flow diagram of a machine for measuring a pressure loss and initial collection efficiency in Examples of the present invention.

Fig. 7 is a graph showing a relation between an amount of accumulated dusts and a particle size measured in Examples of the present invention and Comparative Examples.

Fig. 8 is a graph showing a relation between a PF value and a particle size in Examples of the present invention and Comparative Examples.

BEST MODE FOR CARRYING OUT THE INVENTION

The filter material of the present invention for dust collector for high temperature furnace comprises a heat resistant base fabric and a felt layer of fluorine-containing resin fiber, preferably PTFE staple fiber having a branch and/or a loop on at least one outermost surface thereof. Unless otherwise noted, the following explanation is made with respect to PTFE. The same explanation is applicable to other fluorine-containing resins, too.

The outermost felt layer of PTFE may be directly intermingled with the base fabric. From the viewpoint of reducing a damage to be caused by a mechanical force of a retainer for holding a bag, preferred is a composite felt in which a felt layer (intermediate felt layer) of heat resistant fiber is provided at the dust collection layer side.

The base fabric used in the present invention is a woven fabric or knitted fabric produced from the above-mentioned heat resistant fiber. A weaving or knitting method is not limited particularly. Preferred is the base fabric having a tensile strength of not less than 30 kgf/5 cm, especially not less than 50 kgf/5 cm in order to use it as a filter bag. A selection of the heat resistant fiber depends on an environmental temperature and chemical conditions such as acid, alkali and moisture. For example, when the base fabric is used at a temperature of 190° to 250°C, inorganic fibers such as a carbon fiber and glass fiber and organic synthetic fibers having a melting point (thermal decomposition temperature) of not less than 250°C such as PTFE fiber and polyimide fiber can be used. When the temperature is 120° to 190°C, organic synthetic fibers such as PPS fiber, aramid fiber, phenol resin fiber, fluorine-containing resin fiber other than PTFE, and the like can be used in addition to the above-mentioned fibers.

When the environmental temperature is a relatively low temperature of about 80°C or lower, in addition to the above-mentioned heat resistant fibers, for example, polyolefin fibers such as polyethylene fiber and polypropylene fiber; acrylic fiber, polyamide fiber, polyester fiber, and the like can be used.

It is a matter of course that a base fabric produced by using a PTFE staple fiber making a PTFE web of the present invention can be used.

Then the fluorine-containing resin fiber forming the outermost layer of the filter cloth of the present invention is explained below.

Examples of the fluorine-containing resin fiber are PTFE fiber, especially PTFE staple fiber having a branch and/or a loop. In addition, there can be used, for example, tetrafluoroethylene/perfluoro(alkyl vinyl ether) copolymer (PFA) fiber, tetrafluoroethylene/hexafluoropropylene copolymer (FEP) fiber, ethylene/tetrafluoroethylene copolymer (ETFE) fiber, polyvinyl fluoride (PVF) fiber, polyvinylidene fluoride (PVdF) fiber, polychlorotrifluoroethylene (PCTFE) fiber, ethylene/chlorotrifluoroethylene copolymer (ECTFE) fiber, and the like.

It is preferable that the PTFE staple fiber used in the present invention has a branch and/or a loop. From the viewpoint of excellent intermingling property and property for preventing fibers from falling-off, preferred is a PTPE staple fiber obtained by subjecting a PTFE film to each step of sintering, semi-sintering, stretching, tearing and opening with needle blade rolls rotating at high speed.

Further among them, a staple fiber obtained by semi-sintering is preferred because a stretching ratio is high (three or six times that of a fiber subjected to sintering), a weight per unit area of a web can be reduced since a specific gravity is small, and fluffing can be inhibited and excellent smoothness is obtained by thermo-pressing since the fiber exhibits self-tackiness easily.

In the present invention other fibers, for example, an inorganic fiber, heat resistant synthetic fiber, fluorine-containing resin fiber, polyester fiber and a mixture of two or more thereof can be used together with the above-mentioned PTFE staple fiber.

A mixing amount of the above-mentioned other fiber is 10 to 90 % by weight, preferably 10 to 75 % by weight, further preferably 15 to 75 % by weight. When the mixing ratio is less than 10 % by weight, intermingling property is not improved and the other fiber tends to be merely an impurity, and when more than 90 % by weight, characteristics of PTFE tends not to be exhibited.

An object of mixing two or more other fibers is to produce a filter material suitable for final application thereof by changing characteristics such as entangling strength with other layer, apparent density, electric conductivity and air permeability.

Examples of the above-mentioned inorganic fiber are, for instance, carbon fiber, activated carbon fiber, glass fiber, metal fiber, asbestos, rock wool, and the like. From the viewpoint of a fiber length, preferred are carbon fiber, activated carbon fiber, glass fiber and metal fiber. Preferred further is activated carbon fiber which adsorbs poisonous gas.

Examples of the preferred heat resistant synthetic fiber are, for instance, polyphenylene sulfide (PPS) fiber, polyimide (PI) fiber, para-linked type aramid fiber, meta-linked type aramid fiber, phenol fiber, polyarylate fiber, carbon fiber and fluorine-containing resin fiber. From the viewpoint of density of the felt layer, it is preferable that a fiber diameter is not more than 1 deneer.

Examples of the preferred fluorine-containing resin fiber are, for instance, tetrafluoroethylene/perfluoro(alkyl vinyl ether) copolymer (PFA) fiber, tetrafluoroethylene/hexafluoropropylene copolymer (FEP) fiber, ethylene/tetrafluoroethylene copolymer (ETFE) fiber, polyvinyl fluoride (PVF) fiber, polyvinylidene fluoride (PVdF) fiber, polychlorotrifluoroethylene (PCTFE) fiber, ethylene/chlorotrifluoroethylene copolymer (ECTFE) fiber, and the like.

Examples of the above-mentioned polyester fiber are, for instance, polyethylene terephthalate fiber, polybutylene terephthalate fiber, and the like. From economical point of view such as production in industrial scale, polyethylene terephthalate fiber is preferred. Further for example, nylon fiber, urethane fiber, and the like can be used.

In addition, for example, a staple fiber produced by subjecting an aqueous dispersion obtained through emulsion polymerization of tetrafluoroethylene (TFE) to emulsion spinning and then sintering, a staple fiber obtained from a PTFE film through a sintering step, slitting step and stretching step and a staple fiber obtained from a PTFE film through a sintering step, stretching step, splitting step and cutting step are inferior in intermingling property and collecting ability but may be used in case of use as a composite felt.

To each of the above-mentioned fibers may be added a photo-catalytic metal oxide. Preferred photo-catalytic metal oxides are titanium oxides, particularly anatase type titanium oxide. It is preferable to combine the photo-catalytic metal oxide with a fluorine-containing resin fiber.

A PTFE felt layer can be produced by making a web of PTFE staple fiber into a felt. A weight per unit area of the web (PTFE fiber layer) is preferably 50 to 300 g/m$^2$ from the points that characteristics inherent to PTFE can be maintained and that effects such as friction resistance in various applications of the present invention and merit cost can be obtained, and is further preferably 100 to 250 g/m$^2$ from the viewpoint of good balance between collection efficiency and pressure loss.

In case where a weight per unit area of a web comprising PTFE staple fibers is 50 to 300 g/m$^2$, from the viewpoint that the relatively uniform web having good appearance can be obtained, a fiber length is preferably 1 to 100 mm, more preferably 1 to 50 mm, further preferably 3 to 25 mm, particularly preferably 3 to 15 mm.

Further it is preferable that the PTFE staple fiber has a specific surface area of not less than 0.5 m$^2$/g from the viewpoint of increasing a contacting efficiency between the fine particles and the fiber and enhancing a collection efficiency.

The web of PTFE staple fiber can be produced by usual web forming technique, for example, a method by means of a carding machine, air-lay method, and the like. In that case, since the PTFE staple fiber used in the present invention has a branch and/or a loop, a web ensuring a very few falling off of fibers can be obtained.

The filter material for dust collector for high temperature furnace of the present invention is produced by forming an outermost felt layer by directly intermingling the so-obtained PTFE web with a base fabric or with an intermediate felt layer of heat resistant fiber formed previously on the base fabric. In the present invention, from the viewpoint of reducing a damage of a bag due to external mechanical force, it is preferable to form the composite felt through the intermediate felt layer.

The intermediate felt layer is formed by heat resistant fiber other than the PTFE staple fiber of the outermost layer. Examples of the heat resistant fiber are one to be used for the above-mentioned base fabric and one which can be mixed to the PTFE felt layer. Examples of particularly preferred heat resistant fiber for the intermediate felt layer are, for instance, meta-linked type aramid fiber, polyimide fiber, para-libked type aramid fiber, PPS fiber, polyester fiber, polyamide fiber, phenol resin fiber, other fluorine-containing resin fiber, carbon fiber, glass fiber, and the like. Kind of materials for forming the base fabric and intermediate felt layer may be the same or different. The respective materials may be a fiber mixture. The intermediate felt layer can be formed by intermingling the web of the above-mentioned heat resistant fiber with the fibers of base fabric.

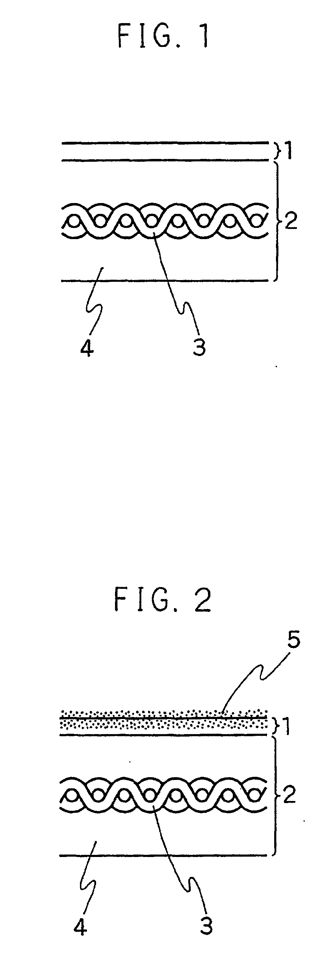

The filter material of composite felt type of the present invention has a cross-sectional structure shown diagrammatically in Fig. 1. In Fig. 1, numeral 1 represents an outermost felt layer (dense layer) comprising PTFE staple fiber and being formed on at least one outermost surface of the intermediate felt layer 2. The intermediate felt layer 2 comprises a heat resistant fiber 4 and has a base fabric 3 in its center portion. Fig. 2 diagrammatically shows a cross-section of the filter material of composite felt type of the present invention of Fig. 1 after collection of dust. Numerals 1 to 4 are as defined above, and numeral 5 represents dust particles.

Then a method for producing the filter material of composite felt type of the present invention is explained below. Unless otherwise noted, a variety of materials mentioned above can be used.

(Formation of intermediate felt layer)

(A) In the present invention, the intermediate felt layer may be formed on the base fabric by usual method, for example, needle punching method.

(Production of PTFE web for making composite felt)

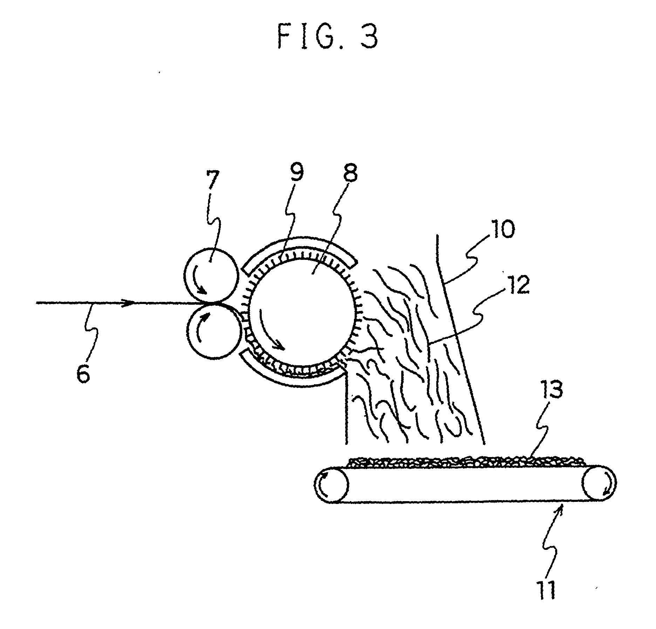

(B) After stretched by 6 to 30 times, a semi-sintered PTFE film is torn and opened with a machine for tearing and opening shown in Fig. 3.

In Fig. 3, numerals 6, 7, 8, 9, 10, 11, 12, and 13 represent a uni-axially stretched PTFE film, pinch roll, needle blade roll, needle, hood, transfer belt, opened PTFE staple fiber and cotton-like material comprising PTFE staple fiber, respectively.

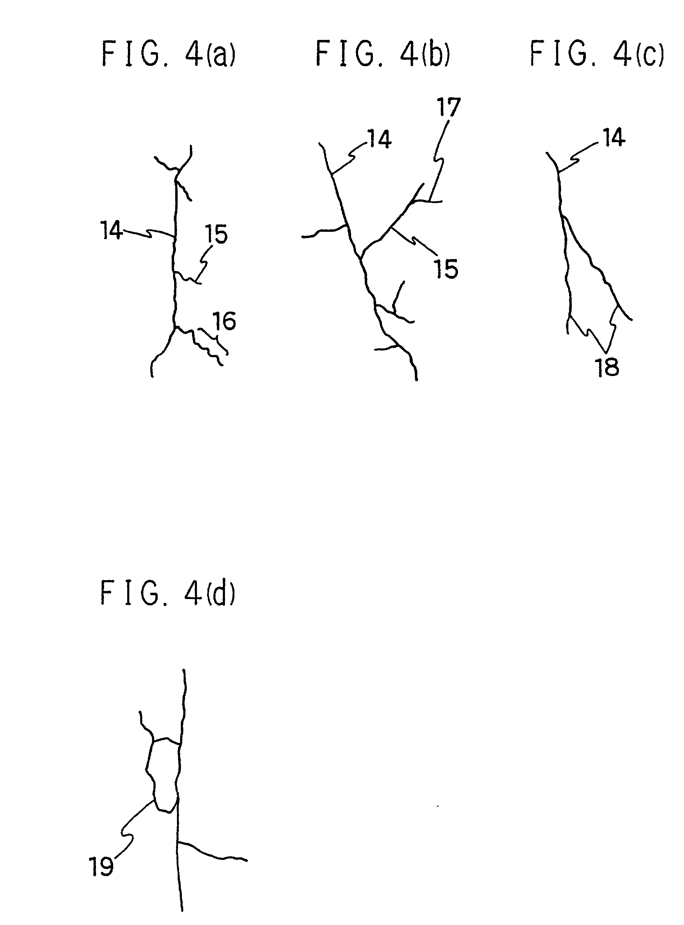

The PTFE staple fiber obtained by tearing and opening mentioned above has a form shown diagrammatically in Fig. 4. In Fig. 4, numeral 14 represents the PTFE staple fiber forming the above-mentioned cotton-like material, numeral 16 represents a crimp, numerals 15, 17 and 18 represent branches, and numeral 19 represents a loop.

Through such tearing and opening steps, it is possible to obtain a web having a weight per unit area of 50 to 300 g/m$^2$ and comprising a cotton-like material of staple fiber having a loop structure and/or branch, and when occasion demands, having a crimping property, a fiber length of 1 to 100 mm and a specific surface area of not less than 0.5 m$^2$/g. (Formation of outermost felt layer)

(C) A composite felt is produced by placing the PTFE web obtained in above (B) on the intermediate felt layer mentioned in above (A) and then combining them by intermingling the fibers of the felt with the staple fibers of the web by using a water jet needle machine. Examples of the conditions for water jet needling are conditions used usually for making cotton fibers into a felt.

In producing the web comprising semi-sintered PTFE staple fibers for making a composite felt, it is preferable to use the machine for tearing and opening shown in Fig. 3 from the point that the fibers are neither accumulated nor stuck inside the machine and further from the point that since the fibers can be directly accumulated on the intermediate felt layer, production steps can be reduced. Also the composite felt may be produced by temporarily placing the PTFE staple fibers on a spun-bonded non-woven fabric or woven fabric having air permeability instead of directly placing on the intermediate felt layer and then transferring the fabric with the fibers thereon onto the intermediate felt layer and intermingling with the above-mentioned water jet needling machine. Also in case of a combination of needle punching with metal needles, intermingling is accelerated, particularly intermingling with heat resistant fibers forming the felt inside the intermediate felt layer is carried out, thereby giving a stronger composite felt.

Also a web having friction resistance and being excellent in releasing property can be produced by making smooth a surface of the outermost felt layer comprising the PTFE staple fiber of the composite felt obtained by the above-mentioned method.

For making a smooth surface, any means which can reduce a friction coefficient and make releasing property excellent may be employed. For example, a continuous belt type laminator (for example, JR:9005 available from Asahi Seni Kikai Kabushiki Kaisha) which is equipped with a nip roll being capable of heating or undergoes nipping with a surface pressure may be employed. Also methods for pressing with a hot iron, iron for domestic use and trouser press may be employed. A state of surface smoothness can be adjusted optionally by a pressure and pressing time in a temperature range of 100° to 360°C.

In the so-obtained filter material of composite felt type, the outermost felt layer comprising the PTFE staple fibers is dense and those fibers have a loop structure and/or a branch. Therefore intermingling with the fibers forming the intermediate felt layer is excellent, and particularly the filter material is excellent in friction property, has elasticity and flexibility and maintains characteristics inherent to PTFE.

The filter material of the present invention can be used for a filter bag for dust collector for high temperature furnace. The filter bag can be produced by, for example, sewing the above-mentioned filter material in the form of bag having a diameter of 100 to 300 mm and a length of 0.5 to 5 m so that the outermost PTFE felt layer faces outside and then inserting a frame called a retainer for maintaining its shape into the bag. A fluid (liquid and gas) having particles of dust, etc. is supplied from the outside of the outermost PTFE felt layer and filtrated. A filtrated clean fluid is released from an opening of the filter bag outside thereof. The above-mentioned staple fiber layer may face the inside of the filter bag. In such a case, a flow of the fluid is reversed. Further in order to make a filtration area large, filter material in the form of pleats may be used.

Also since the staple fibers of the PTFE felt layer are strongly combined with the heat resistant fibers of the base fabric or intermediate felt layer, when used for a filter bag, the filter material has a mechanical strength such as resistance to swelling, vibration and abrasion which arise due to pulse jet air or backwashing air, and a damage of the filter bag can be reduced.

As mentioned above, a single layer felt comprising meta-linked type aramid fiber, PPS fiber, polyimide fiber, PTFE fiber, and the like is widely used as a filter cloth for heat resistant filter bag. The filter material of the present invention can be produced by making a composite felt by combining PTFE staple fibers only on a surface of a conventional single layer filter material, thereby imparting excellent characteristics of PTFE staple fibers at low cost.

Since the surface layer (outermost layer) at dust collecting side of the filter material of the present invention is a felt layer of PTFE staple fiber, particles of dust, etc. are easily released from the felt layer because of excellent characteristic thereof, namely a small surface energy thereof. For example, fastening of wet dusts does not occur and dislodging of dusts is easy.

Further since the dense outermost layer is formed of PTFE staple fibers, particles of dusts do not enter deep into the base felt, and thus increase in pressure loss can be maintained at a low level for a long period of time.

In the present invention, the above-mentioned filter material can be used in the form of plate. For example, the filter material of 500 mm x 500 mm may be framed with metal around its circumference and sealed so that liquid does not leak from the circumference. Also the both sides of the filter material may be covered with a net for reinforcement so as to resist to a pressure of the liquid. Further in order to increase a filtration area, the filter material in the form of pleat may be used. Also the filter material may be in the form of box or in spherical form.

The filter material of the present invention is excellent in collection efficiency, air permeability and easiness of dislodging of dusts in addition to excellent heat resistance.

For example, initial air permeability is not less than 1 $cc/cm^2/sec$, preferably not less than 5 $cc/cm^2/sec$, and can be increased up to 20 $cc/cm^2/sec$. Therefore a pressure loss is small. Usually the filter material having initial air permeability of 10 to 15 $cc/cm^2/sec$ is suitably used.

With respect to dioctyl phthalate (DOP), an initial collection efficiency of particles thereof having a particle size of not less than 1 $\mu$m is not less than 90 %, preferably not less than 95 %. Even when submicron particles having a particle size of not less than 0.3 $\mu$m is contained, the initial collection efficiency is not less than 70 %, preferably not less than 90 %. Therefore a similar substance, i.e. dioxin can be collected at high efficiency like dioctyl phthalate.

Further after dislodging of dusts by pulse jet method (after reviving), there is less blinding and collection efficiency after dislodging is not lowered extremely. For example, an amount of accumulated dusts can be reduced to not more than 5 $g/0.09$ $m^2$, especially not more than 3.5 g/0.09 m2.

Since the filter material is free from wetting due to dewing, even in case of dust collection at a temperature of not more than 100°C, there is no increase in pressure loss attributable to wetting. Also dusts accumulated on a used filter bag can be removed by washing easily. Thus the filter material is excellent in various characteristics.

Each of characteristics is measured by test methods mentioned hereinafter.

The filter material of the present invention is used for dust collectors for various high temperature furnaces. Examples of the dust collectors for high temperature furnaces are, for instance, dust collectors for large-sized or small-sized incinerators for municipal garbage, industrial wastes and wastes from hospitals; dust collectors for metal melting furnaces such as blast furnace, converter, arc furnace for steel making, sintering furnace, cupola, zinc converter, aluminum electrolytic furnace, copper extending facilities, aluminum secondary refining facilities, low frequency furnace, melting, refining and reclaiming furnace for lead and open type arc furnace for ferroalloy; dust collectors for baking furnaces such as coke oven, lime kiln, gypsum kiln, graphite baking furnace and carbon black production facilities; dust collectors for powder dryers for fertilizer plant, pharmaceutical plant, asphalt plant and spray-dryer; dust collectors for various boilers such as coal fluid bed boiler, powdered coal boiler, oil coke boiler, coal stoker boiler, wood chip boiler and waste tire boiler; and the like.

The filter material of the present invention is suitable for dust collectors for high temperature furnaces, and also can be used for other various dust collectors. Examples of the other dust collectors for collecting pulverized and classified powder products are, for instance, dust collectors for casting plant and fertilizer plant, petroleum coke powder collector, dust collector for foundry sand reclamation furnace, dust collector for stone pulverizing plant and dust collector for car shredder; examples of the other dust collectors for pneumatic conveyance are, for instance, dust collectors for agricultural chemical plant and powder plant and for cement clinker; examples of the other dust collectors for local dust collection are, for instance, dust collectors for sizing plant, coke oven guide cart, exhaust gas from plasma cutter, lead powder production plant and cold scarf; and the like. In addition, the filter material can be used for dust collector for fertilizer store house, dust collector for hot dipping tank, collector for electrostatic powder coating, dust collector for grinder of brake lining, dust collector for closed type mixer for rubber refining, dry type fluorine gas remover for glass fiber melting furnace, dust collector for oxygen production plant, dust collector for stock pile tank, and the like.

Mentioned below are preferred embodiments of the filter material for dust collectors for high temperature furnaces of the present invention, and the present invention is not limited to those embodiments.

(A)

(1) Base fabric: Woven or knitted fabric of heat resistant fiber
(2) Fluorine-containing resin felt layer: PTFE staple fiber having a branch and/or a loop

Fiber length: 1 to 100 mm
Specific surface area: not less than 0.5 $m^2$/g
Weight per unit area: 50 to 300 $g/m^2$

(3) Characteristics

Initial air permeability: 10 $cc/cm^2$/sec or more
Initial collection efficiency (DOP): Particles of 1 μm or more; 90 % or more, particles of 0.3 μm or more; 70 % or more
Amount of accumulated dusts: 5 g/0.09 $m^2$ or less

(4) Preferable application
Filter bag for dust collector for high temperature furnace

(B)

(1) Base fabric: Woven or knitted fabric of heat resistant fiber
(2) Intermediate felt layer: Heat resistant fiber
Weight per unit area ((1) + (2)): 300 to 800 $g/m^2$
(3) Outermost felt layer of fluorine-containing resin fiber: PTFE staple fiber having a branch and/or a loop

Fiber length: 1 to 50 mm
Specific surface area: not less than 0.5 $m^2$/g
Weight per unit area: 50 to 300 $g/m^2$

(4) Characteristics

Initial air permeability: 5 $cc/cm^2$/sec or more
Initial collection efficiency (DOP): Particles of 1 μm or more; 90 % or more, particles of 0.3 μm or more; 70 % or more
Amount of accumulated dusts: 5 g/0.09 $m^2$ or less

(5) Preferable application
Filter bag for dust collector (operation temperature: not less than 120°C) for high temperature furnace

(C)

(1) Base fabric: Woven fabric of para-linked type aramid fiber, meta-linked type aramid fiber, PPS fiber, polyimide fiber and fluorine-containing resin fiber
(2) Intermediate felt layer: Para-linked type aramid fiber, meta-linked type aramid fiber and PPS fiber
Weight per unit area ((1) + (2)): 300 to 800 $g/m^2$
(3) Outermost felt layer of fluorine-containing resin fiber: Semi-sintered PTFE staple fiber having a branch and/or a loop

Fiber length: 1 to 50 mm
Specific surface area: not less than 0.9 $m^2$/g
Weight per unit area: 100 to 250 $g/m^2$

(4) Characteristics

Initial air permeability: 9 cc/cm$^2$/sec or more
Initial collection efficiency (DOP): Particles of 1 μm or more; 90 % or more, particles of 0.3 μm or more; 70 % or more
Amount of accumulated dusts: 5 g/0.09 m$^2$ or less

(5) Preferable application
Filter bag for dust collectors for various incinerators, metal melting furnace, sintering furnace, dryer, etc.

(D)

(1) Base fabric: Meta-linked type aramid fiber and PPS fiber
(2) Intermediate felt layer: Meta-linked type aramid fiber and PPS fiber
Weight per unit area ((1) + (2)): 350 to 500 g/m$^2$
(3) Outermost felt layer of fluorine-containing resin fiber: Semi-sintered PTFE staple fiber having a branch and/or a loop

Fiber length: 3 to 25 mm
Specific surface area: not less than 1.5 m$^2$/g
Weight per unit area: 100 to 200 g/m$^2$

(4) Characteristics

Initial air permeability: 9 cc/cm$^2$/sec or more
Initial collection efficiency (DOP): Particles of 1 μm or more; 95 %, particles of 0.3 μm or more; 90 %
Amount of accumulated dusts: 5 g/0.09 m$^2$ or less

(5) Preferable application
Incinerators for municipal garbage and industrial wastes

(E)

(1) Base fabric: Plain-woven fabric of PPS fiber
(2) Intermediate felt layer: PPS staple fiber
Weight per unit area ((1) + (2)): 350 to 500 g/m$^2$
(3) Outermost felt layer of fluorine-containing resin fiber: Semi-sintered PTFE staple fiber having a branch and/or a loop

Fiber length: 3 to 25 mm
Specific surface area: not less than 1.5 m$^2$/g
Weight per unit area: 100 to 200 g/m$^2$

(4) Characteristics

Initial air permeability: 9 cc/cm$^2$/sec or more
Initial collection efficiency (DOP): Particles of 1 μm or more; 95 %, particles of 0.3 μm or more; 90 %
Amount of accumulated dusts: 3 g/0.09 m$^2$ or less

(5) Preferable application
Incinerators for municipal garbage and industrial wastes

The present invention is then explained by means of examples and comparative examples, but is not limited to them.

EXAMPLE 1

An un-sintered film was produced from PTFE fine powder through usual method, and heat-treated for 45 seconds in a salt bath heated to 337°C to give a semi-sintered film which was then stretched uni-axially at 350°C by 2.5 times. The uni-axially stretched film was torn and opened with a needle blade roll at a rotation speed of 4,500 rpm at a film feeding speed of 1.5 m/min, and thereby a cotton-like material of PTFE staple fiber having a branch and a loop was produced. With respect to the obtained PTFE staple fiber, a fiber length was about 1 mm to about 100 mm, a specific surface area was 3.3 m$^2$/g, and an average fiber diameter was 10 μm.

Then a web having a weight of 150 g/m$^2$ was produced from the obtained cotton-like material of PTFE staple fiber.

The web of PTFE was placed on an intermediate felt layer of a filter cloth (weight: 350 g/m$^2$, tensile strength: 80 kgf/5 cm in vertical direction, 115 kgf/5 cm in horizontal direction) produced by intermingling the intermediate felt layer of meta-linked type aramid fiber with a base fabric (woven fabric of heat resistant fiber). Then intermingling of the PTFE staple fiber with the meta-linked type aramid fiber of intermediate felt layer was carried out by water jet needle method under the conditions mentioned below to give a composite felt type filter material having a PTFE felt layer as its outermost layer.

(Conditions for water jet needling)

The nozzles of the water jet needle were so arranged that the nozzles having 150 μm diameter were set at intervals of 0.6 mm in the transverse direction and at four rows in the longitudinal direction. The injection pressure was 17 kgf/cm$^2$, 28 kgf/cm$^2$, 55 kgf/cm$^2$ and 55 kgf/cm$^2$ at the first, second, third and fourth rows, respectively. The water jet needling was carried out three times under the above-mentioned conditions.

With respect to the obtained composite felt type filter material of the present invention and the filter cloth (Comparative Example 1) of meta-linked type aramid fiber before providing the PTFE felt layer, the following tests were carried out.

Air permeability: Measurement was carried out with a Frazier type air permeability tester according to JIS L1096. The results are shown in Table 1.

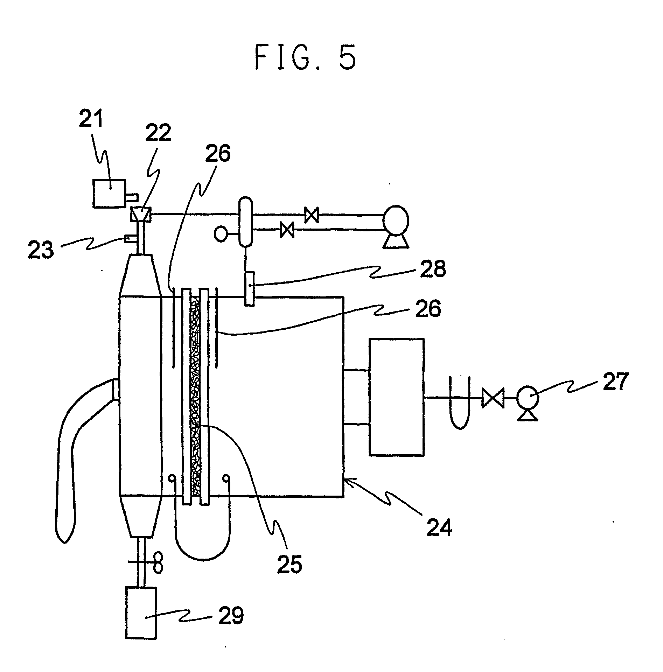

Amount of accumulated dusts: Measurement was carried out under the following conditions by using Kanto loam dp50 (1.5 μm diameter) as a pseudo-dust with an equipment shown in Fig. 5. The results are shown in Table 1.

Filtration speed: 3.0 m/sec
Dust concentration: 12.5 g/m$^3$
Filtration area: 30 x 30 cm (0.09 m$^2$)

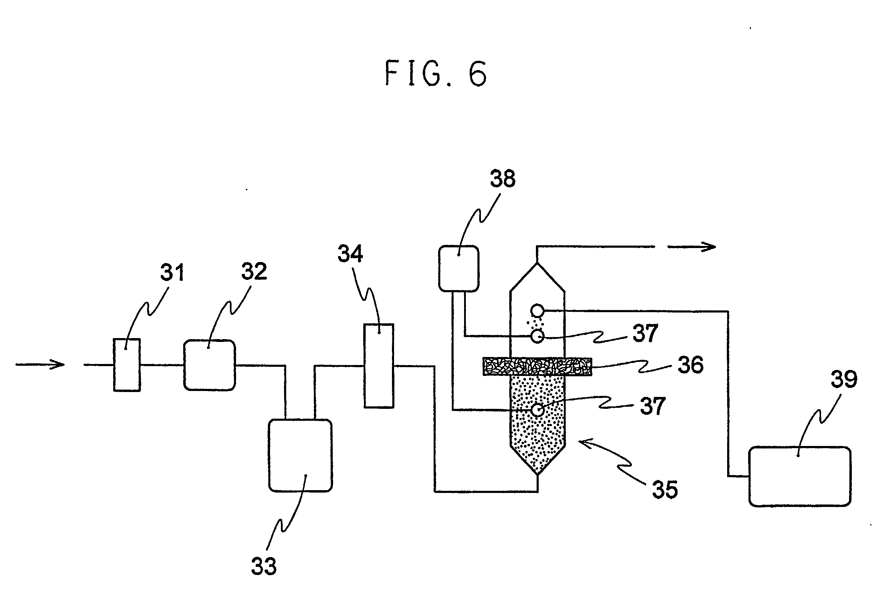

Pressure loss: Measurement was made at 3.3 cm/sec of a filtrating air velocity by using an equipment shown in Fig. 6. The results are shown in Table 1.

Thickness: A thickness was measured by applying a load of 20 g/cm$^2$ by using a compressive elasticity tester (available from Nakayama Denki Sangyo Kabushiki Kaisha). Measurement was made at 10 points selected at random and an average of them was used. The results are shown in Table 1.

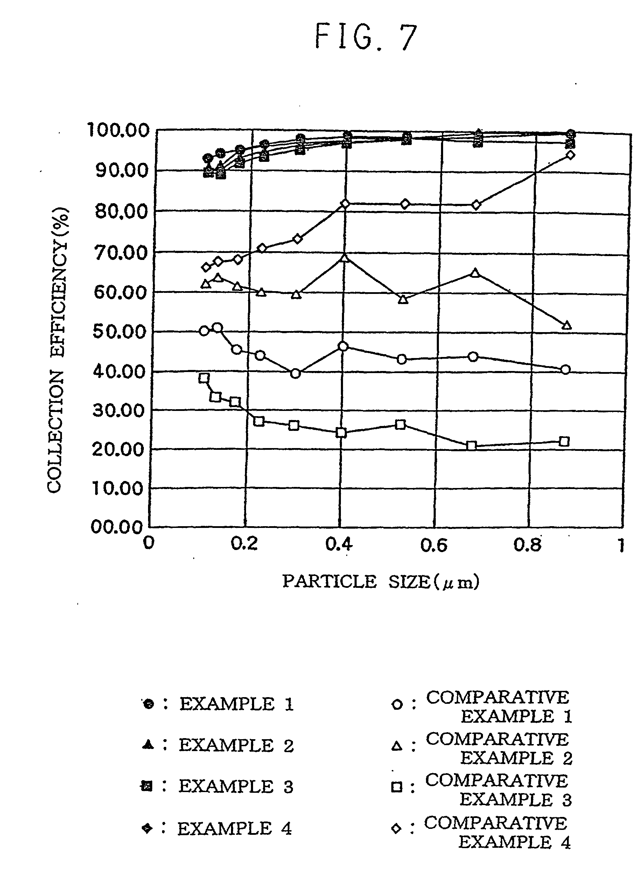

Initial collection efficiency (DOP) and penetration of particles: Measurement was made under the following conditions by using dioctyl phthalate (DOP) particles (particle size range: about 0.1 μm to about 1.0 μm) with an equipment shown in Fig. 6. The results are shown in Fig. 7.

Filtrating air velocity: 3.3 cm/sec
Filtration area: 95 cm$^2$
Dust concentration upstream of filter: 30,000 particles/liter in case of particles having a diameter of 0.3 μm.

(Explanation of equipment shown in Fig. 5)

Powder dusts for test are supplied through powder dusts feeding portion comprising a feeder 21 with a heater, ejector 22 and air inlet 23. In a dust collection chamber 24 is provided a sample filter material 25 to be tested, and at both sides of the sample filter material 25 are provided pressure sensors 26. In the dust collection chamber 24, there is a draft flowing from the powder dusts feeding portion toward the right side in the figure. The supplied powder dusts are accumulated on the left side of the sample filter material 25 in the figure, and a pressure differential arises between the right and left sides of the sample filter material. When the pressure differential is increased up to a specified value, an impulse wave is sent from a pulse injection port 28 provided on the top of the dust collection chamber 24 to drop the powder dusts accumulated on the left side of the sample filter material 25 in the figure into a dust hopper 29. An amount of the accumulated dusts is calculated from a weight difference before and after the dust collection.

(Explanation of equipment shown in Fig. 6)

Air is introduced through a filter 31 and mass flow controller 32 into a DOP particle generator 33, and then fed to a dust collection chamber 35 from the bottom thereof after particles having a large particle size (exceeding 1 μm) beyond a measuring range are reduced with a prefilter 34. In the dust collection chamber 35 is provided a sample filter material 36, and pressure sensors 37 are provided above and below the sample filter material 36 to detect a pressure differential with a pressure differential meter 38. The air flow is adjusted with the mass flow controller 32 so that the pressure differential becomes constant. Numeral 39 is a particle counter which measures the number of particles of each particle size in the flowing air having passed through the sample filter material 36 and calculates initial collection efficiency and particle penetration efficiency of each particle size. The pressure differential is measured with the pressure differential meter while the air flow is maintained constant.

$$\text{Initial collection efficiency (\%)} = \frac{\text{Number of particles supplied - Number of particles passed}}{\text{Number of particles supplied}} \times 100$$

$$\text{Particle penetration efficiency} = \frac{\text{Number of particles passed}}{\text{Number of particles supplied}}$$

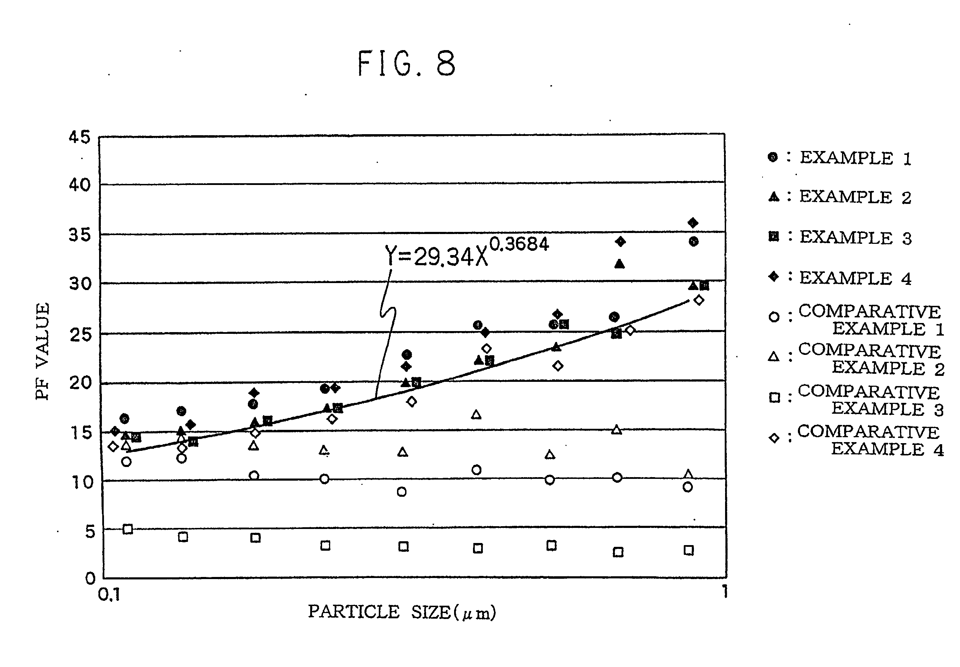

Also the PF value was calculated from the pressure differential and particle penetration efficiency according to the above-mentioned formula (1). The results are shown in Fig. 8.

EXAMPLE 2 and COMPARATIVE EXAMPLE 2

The filter material of the present invention was produced in the same manner as in Example 1 by providing an outermost PTFE felt layer except that there was used a filter cloth (tensile strength is shown in Table 1) obtained by intermingling PPS fibers as an intermediate felt layer with a heat resistant base fabric. The above-mentioned filter cloth before provided with the PTFE felt layer was used for Comparative Example 2.
Characteristics of each of the obtained filter materials were measured. The results are shown in Table 1, Fig. 7 and Fig. 8.

EXAMPLE 3 and COMPARATIVE EXAMPLE 3

The filter material of the present invention was produced in the same manner as in Example 1 by providing a PTFE felt layer except that there was used a filter cloth (tensile strength is shown in Table 1) obtained by intermingling polyimide fibers as an intermediate felt layer with a heat resistant base fabric. The above-mentioned filter cloth without the PTFE felt layer was used for Comparative Example 3.
Characteristics of each of the obtained filter materials were measured. The results are shown in Table 1, Fig. 7 and Fig. 8.

EXAMPLE 4

The filter material of the present invention was produced in the same manner as in Example 1 by providing an outermost PTFE felt layer except that there was used a filter cloth obtained by intermingling a web of staple fiber of PTFE monofilament produced through emulsion spinning method as an intermediate felt layer with a base fabric of PTFE monofilament produced similarly through emulsion spinning method.
Characteristics of the obtained filter material were measured. The results are shown in Table 1, Fig. 7 and Fig. 8.

COMPARATIVE EXAMPLE 4

A web of a fiber mixture comprising 85 % by weight of staple fiber (having neither branch nor loop) obtained by cutting PTFE monofilament produced by emulsion spinning method and 15 % by weight of cut glass fiber was produced, and then the web was intermingled on both sides of a base fabric which was a woven fabric of PTFE monofilament produced by emulsion spinning method to give a filter cloth. Characteristics of the filter cloth were measured. The results are shown in Table 1, Fig. 7 and Fig. 8.

TABLE 1

| | Ex. 1 | Com. Ex. 1 | Ex. 2 | Com. Ex. 2 | Ex. 3 | Com. Ex. 3 | Ex. 4 | Com. Ex. 4 |
|---|---|---|---|---|---|---|---|---|
| **Base fabric:** Tensile strength (kgf/5 cm) | | | | | | | | |
| Vertical | 81 | 80 | 105 | 100 | 70 | 75 | 67 | 42 |
| Horizontal | 117 | 115 | 145 | 145 | 150 | 147 | 79 | 77 |
| **Intermediate felt layer** | | | | | | | | |
| Kind | Meta-linked type aramid | Meta-linked type aramid | PPS | PPS | Polyimide | Polyimide | PTFE * | PTFE * (85)/glass fiber (15) |
| Weight (g/m$^2$) | 350 | 350 | 475 | 475 | 500 | 500 | 856 | 725 |
| **PTFE felt layer** | | | | | | | | |
| Weight (g/m$^2$) | 150 | – | 150 | – | 150 | – | 150 | – |

- continued -

EP 1 116 510 A1

- continued -

| | | | | | | | | |
|---|---|---|---|---|---|---|---|---|
| Thickness (mm) | 1.6 | 1.4 | 2.1 | 1.8 | 2.4 | 2.1 | 1.6 | 1.6 |
| Initial air permeability $(cc/cm^2/sec)$ | 11.9 | 26.5 | 10.9 | 22.3 | 9.5 | 19.6 | 11.0 | 12.8 |
| Pressure loss $(mmH_2O)$ | 7.3 | 2.5 | 7.3 | 3.1 | 7.0 | 4.2 | 7.0 | 3.7 |
| Amount of accumulated dusts $(g/0.09\ m^2)$ | 3.3 | 31.5 | 3.0 | 4.8 | 2.7 | 7.5 | 3.1 | 15.1 |

* : The PTFE fiber is a staple fiber produced by emulsion spinning method and having neither branch nor loop.

As it is clear from Table 1, Fig. 7 and Fig. 8, the filter material of the present invention having an outermost felt layer comprising a fluorine-containing resin fiber, particularly PTFE staple fiber having a branch and/or a loop can collect submicron particles at high efficiency, ensures a small amount of accumulated dusts and can be used repeatedly for a long period of time.

INDUSTRIAL APPLICABILITY

The filter material of the present invention for dust collector for high temperature furnace can be used under high temperature environment because the materials thereof are excellent in heat resistance and are combined with each other by intermingling but not with an adhesive, and further the filter material collects submicron particles at high collection efficiency, is excellent in ability of collecting dioxin, etc. and ensures a small amount of accumulated dusts (being excellent in ability of dislodging), thereby making it possible to use for a long period of time.

**Claims**

1.   A filter material for dust collector for high temperature furnace which comprises a base fabric of heat resistant fiber and a layer of fluorine-containing resin fiber and is characterized in that the layer of fluorine-containing resin fiber forms at least one outermost layer of the filter material.

2.   The filter material for dust collector of Claim 1, wherein the filter material has an intermediate layer of heat resistant fiber between the base fabric and the outermost fluorine-containing resin fiber layer.

3.   The filter material for dust collector of Claim 1 or 2, wherein the filter material is used at a site where dioxin is generated.

4.   The filter material for dust collector of any of Claims 1 to 3, wherein the fluorine-containing resin fiber is a polytetrafluoroethylene fiber.

5.   The filter material for dust collector of any of Claims 1 to 4, wherein the fluorine-containing resin fiber is a fiber having a branch and/or a loop.

6.   The filter material for dust collector of any of Claims 1 to 5, wherein the heat resistant fiber is a polyphenylene sulfide fiber.

7.   The filter material for dust collector of Claim 1 or 2, wherein a weight of the layer comprising said fluorine-containing resin fiber is 50 to 300 g/m$^2$.

8.   The filter material for dust collector of Claim 6 or 7, wherein a tensile strength of said base fabric or a total of the base fabric and intermediate layer is not less than 30 kgf/5 cm.

9.   The filter material for dust collector of Claim 1 or 2, wherein an initial air permeability of the filter material is not less than 1 cc/cm$^2$/sec.

10.  The filter material for dust collector of Claim 1 or 2, wherein an initial collection efficiency of dioctyl phthalate particles having a particle size of not less than 1 μm is not less than 90 %.

11.  The filter material for dust collector of Claim 1 or 2, wherein an initial collection efficiency of dioctyl phthalate particles having a particle size of not less than 0.3 μm is not less than 70 %.

12.  The filter material for dust collector of any of Claims 1 to 11, wherein provided that the particle size (μm) of dioctyl phthalate particles is represented by X and PF value calculated from an equation (1):

$$\text{PF value} = \frac{-\log (\text{particle penetration efficiency})}{\text{Pressure loss (mmH}_2\text{O)}} \times 100 \qquad (1)$$

is represented by Y, Y meets the following equation:

$$Y > 29.34X^{0.3684}.$$

**13.** A filter bag for dust collector produced by using the filter material of any of Claims 1 to 12.

**14.** A dust collector provided with the filter bag of Claim 13.

FIG. 1

FIG. 2

# FIG. 3

FIG. 4(a)　　FIG. 4(b)　　FIG. 4(c)

FIG. 4(d)

FIG. 5

FIG. 6

# FIG. 7

Legend:

● : EXAMPLE 1

▲ : EXAMPLE 2

▣ : EXAMPLE 3

◆ : EXAMPLE 4

○ : COMPARATIVE EXAMPLE 1

△ : COMPARATIVE EXAMPLE 2

□ : COMPARATIVE EXAMPLE 3

◇ : COMPARATIVE EXAMPLE 4

FIG. 8

Y=29.34X^{0.3684}

- ● : EXAMPLE 1
- ▲ : EXAMPLE 2
- ▦ : EXAMPLE 3
- ◆ : EXAMPLE 4
- ○ : COMPARATIVE EXAMPLE 1
- △ : COMPARATIVE EXAMPLE 2
- □ : COMPARATIVE EXAMPLE 3
- ◇ : COMPARATIVE EXAMPLE 4

## INTERNATIONAL SEARCH REPORT

| International application No. |
|---|
| PCT/JP99/02573 |

A. CLASSIFICATION OF SUBJECT MATTER
Int.Cl$^6$ B01D39/16

According to International Patent Classification (IPC) or to both national classification and IPC

B. FIELDS SEARCHED

Minimum documentation searched (classification system followed by classification symbols)
Int.Cl$^6$ B01D39/16

Documentation searched other than minimum documentation to the extent that such documents are included in the fields searched
Jitsuyo Shinan Koho          1926–1996   Toroku Jitsuyo Shinan Koho   1994–1999
Kokai Jitsuyo Shinan Koho   1971–1999   Jitsuyo Shinan Keisai Koho   1996–1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 57-126655, A (E.I. Du Pont de Nemours & Co.), 6 August, 1982 (06. 08. 82), Claims ; drawings & US, 4324574, A & EP, 55112, A & DE, 3169483, G | 1, 2, 4, 9-14 |
| X | JP, 2-135106, A (E.I. Du Pont de Nemours & Co.), 24 May, 1990 (24. 05. 90), Claims & US, 4840838, A & EP, 358222, A & DE, 68905411, E | 1, 4, 8, 9, 13 |
| X | JP, 2-191755, A (E.I. Du Pont de Nemours & Co.), 27 July, 1990 (27. 07. 90), Full text & US, 4361619, A & EP, 66414, A & DE, 3272694, G | 1, 4, 7, 9-13 |
| X | JP, 9-75637, A (Toray Industries,Inc.), 25 March, 1997 (25. 03. 97), Full text ; Fig. 2 (Family: none) | 1-4, 7, 9-14 |

| [x] Further documents are listed in the continuation of Box C. | [ ] See patent family annex. |
|---|---|

\* Special categories of cited documents:
"A"  document defining the general state of the art which is not considered to be of particular relevance
"E"  earlier document but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 3 August, 1999 (03. 08. 99) | 10 August, 1999 (10. 08. 99) |

| Name and mailing address of the ISA/ Japanese Patent Office | Authorized officer |
|---|---|
| Facsimile No. | Telephone No. |

Form PCT/ISA/210 (second sheet) (July 1992)

| | **INTERNATIONAL SEARCH REPORT** | International application No. |
|---|---|---|
| | | PCT/JP99/02573 |

| C (Continuation). DOCUMENTS CONSIDERED TO BE RELEVANT | | |
|---|---|---|
| Category* | Citation of document, with indication, where appropriate, of the relevant passages | Relevant to claim No. |
| X | JP, 9-225227, A (Nippon Felt Kogyo K.K.), 2 September, 1997 (02. 09. 97), Full text (Family: none) | 1, 4, 7, 8, 13 |
| X | WO, 96/00807, A1 (Daikin Industries,Ltd.), 11 January, 1996 (11. 01. 96), Full text & EP, 768394, A1 | 1, 4-6, 9, 13 |

Form PCT/ISA/210 (continuation of second sheet) (July 1992)